# EUROPÄISCHE PATENTSCHRIFT

(11) **EP 1 695 547 B1**
(45) Veröffentlichungstag und Bekanntmachung des Hinweises auf die Patenterteilung: **02.05.2007**
(21) Anmeldenummer: 04820614.8
(22) Anmeldetag: 14.12.2004
(51) Int. Cl.: H04N 5/225, F21V 21/00, H04N 13/00

(54) **BELEUCHTUNGSTRÄGER MIT EMITTIER-MITTELN, INSBESONDERE FÜR EIN OPTISCHES MODUL, SOWIE VERFAHREN ZU DESSEN HERSTELLUNG**
ILLUMINATION SUPPORT COMPRISING EMISSION MEANS, ESPECIALLY FOR AN OPTICAL MODULE, AND METHOD FOR PRODUCING THE SAME
SUPPORT D'ECLAIRAGE COMPORTANT DES ELEMENTS D'EMISSION NOTAMMENT DESTINE A UN MODULE OPTIQUE, ET PROCEDE DE FABRICATION

(30) Priorität: 19.12.2003 DE 10359926
(43) Veröffentlichungstag der Anmeldung: 30.08.2006
(73) Patentinhaber: SIEMENS AKTIENGESELLSCHAFT, 80333 München (DE)
(72) Erfinder: DIRMEYER, Josef, 92439 Bodenwöhr (DE); FRENZEL, Henryk, 93059 Regensburg (DE); SCHMIDT, Harald, 93055 Regensburg (DE)
(86) Internationale Anmeldenummer: PCT/EP2004/053451
(87) Internationale Veröffentlichungsnummer: WO 2005/062600

(56) Entgegenhaltungen:
- DE-U1- 20 205 714
- US-A- 5 010 412
- US-A1- 2004 212 996

## Beschreibung

Die vorliegende Erfindung betrifft einen Beleuchtungsträger mit einer Mehrzahl an Emittier-Mitteln zum Emittieren von elektromagnetischer Strahlung, insbesondere für ein optisches Modul mit wenigstens einer Linseneinheit zum projizieren von elektromagnetischer Strahlung auf eine für elektromagnetische Strahlung sensitive Fläche.

Die Erfindung betrifft weiterhin ein Verfahren zur Herstellung eines derartigen Beleuchtungsträgers.

Schließlich betrifft die Erfindung auch ein optisches Modul, umfassend einen erfindungsgemäßen Beleuchtungsträger.

Für das Erfassen von komplexen Szenarien finden zunehmend Videoanwendungen Verwendung, für welche, insbesondere im Automobilbau, nicht nur schwierige Einbau- und Umweltverhältnisse (Platz, Licht, Wärme, etc.) zu lösen sind, sondern welche, um die Szene unter allen Bedingungen gut erfassen zu können, immer häufiger eine aktive Beleuchtung benötigen. Um beispielsweise den Fahrer oder Beifahrer oder andere Verkehrsteilnehmer nicht zu stören oder zu behindern, sollte deren Wellenlänge im nichtsichtbaren Bereich liegen. Für diese Beleuchtung wird heute meist infrarotes (IR) Licht verwendet. Dazu werden spezielle IR-LED, Laserdioden oder auch spezielle Lampen verwendet. Diese Strahler werden ggf. durch bestimmte Scheiben oder auch Abdeckelemente gegenüber der Umwelt geschützt.

Um die Szene unter allen Bedingungen gut zu erfassen wird meist eine ganz spezielle Ausleuchtungs-Charakteristik benötigt. So müssen weiter entfernte Bereiche mit höherer Intensität beleuchtet werden. Ein weiteres Problem stellt, insb. bei günstigen baukleinen Objektiven, der lichtschwächere Randbereich des Objektivs im Gegensatz zu dessen Zentrum dar. Auch hier muss nach Möglichkeit mehr Licht in den Randbereich gebracht werden, um den sogenannten "Randabfall" zu kompensieren. Schließlich lassen sich definierte Bereiche einer Szene mittels bestimmter optischer Hilfsmittel wie Linsen, Prismen oder dergleichen besser ausleuchten.

Es ist bekannt, LEDs auf bestimmte Leiterplattenboards zu setzen, die bevorzugt für Kühlmaßnahmen optimiert sind, insb. sog. FR4 - Leiterplatten mit dicken Kupferschichten oder auf Aluminiumträger angeordnete PCBs, wobei dem damit verbundenen Vorteil der Nachteil erhöhter Herstellungskosten entgegensteht.

Es ist auch bekannt, mehrere mit LEDs bestückte Leiterplatten vorbezeichneter Art unter einem bestimmten Winkel zueinander anzuordnen, um so eine Szene besser ausleuchten zu können.

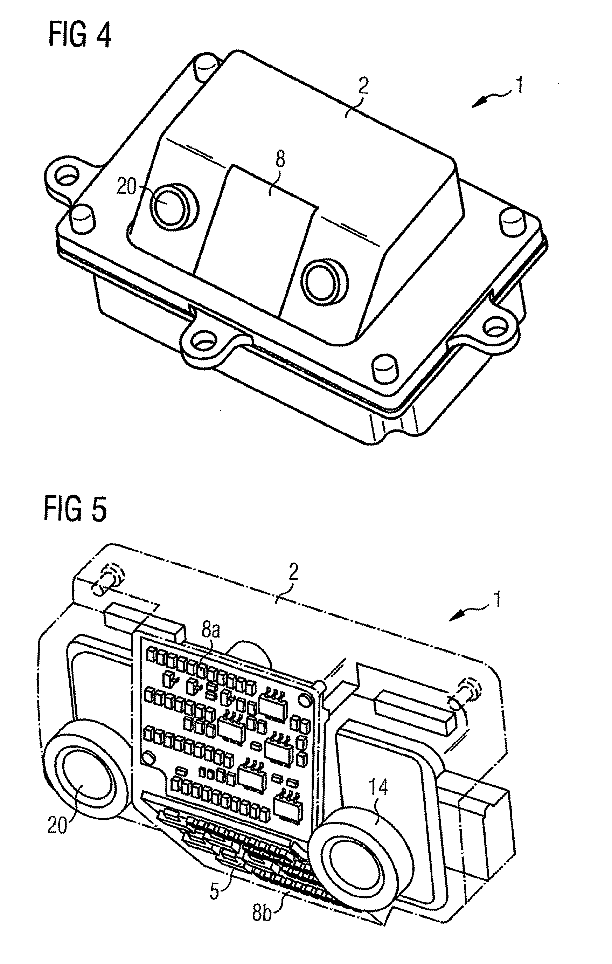

Fig. 4 zeigt beispielhaft in einer perspektivischen Ansicht ein erstes als Stereokamera ausgebildetes optisches Modul 1 nach dem Stand der Technik mit als LED-Feld 5a ausgebildeten Emittier-Mitteln 5, welche auf einem herkömmlichen als starre Platine 8 ausgebildeten Beleuchtungsträger feldförmig zwischen zwei Linseneinheiten 20 im Kameragehäuse 2 angeordnet sind.

Fig. 5 zeigt beispielhaft in einer perspektivischen Ansicht ein alternatives als Stereokamera ausgebildetes optisches Modul 1 nach dem Stand der Technik. Deutlich erkennbar ist, wie im Unterschied zur Kamera 1 nach Fig. 4 zwischen den Linseneinheiten 20 zwecks verbesserter Ausleuchtung einer Szene zwei mit LEDs 5a bestückte Platinen 8a, 8b unter einem Winkel zueinander angeordnet sind. Es können auch mehrere PCBs 8a, 8b, ... vorgesehen sein, die in unterschiedlichen Winkeln zueinander angeordnet sind, um dadurch eine Szene besser auszuleuchten. Derartig aufgebaute Kameras 1 erfordern nicht nur eine Vielzahl von z.B. als LEDs 5a ausgebildeten Emittier-Mittel 5. Sie sind aufgrund der möglichst nahen Anordnung des LED-Feldes 5a benachbart der Linseneinheiten 14, 20 auch nachteilig mit einer Lichtabdichtungsproblematik behaftet.

Andere mit LEDs ausgestattete Beleuchtungsträger sind in den Dokumenten US-A-2004/21996, DE-U-20205714 und US-A-5010412 offenbart.

Die Erfindung sucht die Nachteile der bekannten Konstruktionen, insbesondere zur verbesserten Ausleuchtung einer Szene, zu vermeiden.

Diese Aufgabe wird durch einen Beleuchtungsträger mit den Merkmalen gemäß Patentanspruch 1, durch ein Verfahren zum Herstellen derartiger Beleuchtungsträger mit den Merkmalen gemäß Patentanspruch 6 sowie durch ein optisches Modul mit den Merkmalen gemäß Patentanspruch 10 gelöst. Vorteilhafte Aus- und Weiterbildungen, welche einzeln oder in Kombination miteinander eingesetzt werden können, sind Gegenstand der abhängigen Ansprüche.

Die Erfindung baut auf gattungsgemäßen Beleuchtungsträgern, insbesondere für ein optisches Modul, dadurch auf, dass der Beleuchtungsträger einen Grundkörper mit einer Mehrzahl daran angeordneter Auskragungen aufweist, wobei auf einer jeden Auskragung zumindest ein Emittier-Mittel angeordnet ist. Die gezielte Ausbildung von Auskragungen mit Beleuchtungspunkten hat eine verbesserte Lichtausbeute zum Vorteil, so dass der erfindungsgemäße Beleuchtungsträger mit weniger Emittier-Mitteln auskommt und damit preiswerter ist, als vergleichbare starre Beleuchtungsplatinen im Stand der Technik. Darüber hinaus verbraucht die erfindungsgemäße Ausführung durch weniger benötige Emittier-Mitteln weniger Strom und erzeugt weniger Verlustleistung bzw. Wärme.

Erfindungsgemäß bevorzugt ist die Abstrahlrichtung der Beleuchtungspunkte einer jeden Auskragung durch Aufbringung des Beleuchtungsträgers auf eine entsprechend vorgeformte Trägerschicht oder einem Gehäuse oder einem anderen geeigneten Bauteil bezüglich einer zu beleuchtenden Szene definiert ausrichtbar. Alternativ, ggf. auch kumulativ, hierzu ist die Abstrahlrichtung der Beleuchtungspunkte einer jeden Auskragung, insbesondere durch Auf- und/oder Abbiegung und/oder Verdrehung (Torsion) der einzelnen Auskragungen, gezielt bezüglich einer zu beleuchtenden Szene ausrichtbar. Die individuelle Ausrichtbarkeit erlaubt vorteilhaft nicht nur die Beleuchtung einer Szene in einer bislang nicht dargewesenen Effektivität; sie zeichnet sich gleichermaßen durch eine Designfreiheit aus, wie sie insb. für zukünftige Innen- und Außenraumanwendungen der Automobilbranche unumgänglich sein dürfte.

Um Licht insb. dorthin zu bringen, wo es gebraucht wird, nämlich wegen des beschriebenen "Randabfalls" möglichst unmittelbar an eine Optik bzw. Linseneinheit, weist der Beleuchtungsträger, bevorzugt für jede Linseneinheit, wenigstens eine, beispielsweise kreisförmige, Aussparung auf, um welche zumindest ein Teil der Auskragungen, vorzugsweise sternförmig, halbmondförmig oder dergleichen, angeordnet sind. Aber auch wenn die Emittier-Mittel, wie z.B. LEDs, nicht kreisförmig oder nicht ganz umlaufend (z.B. nach einer Stelle offen) um ein Objektiv angeordnet würden, ist es möglich, mit dem erfindungsgemäß bevorzugt ausrichtbaren Auskragungen des Beleuchtungsträger eine dreidimensionale Raumbeleuchtung zu realisieren, selbst dann, wenn die Emittier-Mittel bei hinreichend genug beabstandeten Objektiven im Wesentlichen zwischen diesen angeordnet sind.

Zur Verbesserung der Ausleuchtung und/oder Ansteuerung einzelner oder Gruppen von Beleuchtungspunkten können bevorzugt einzeln oder feldförmig angeordnete zusätzliche Emittier-Mittel, SMD Bauteilen, Elektronikkomponenten wie Ansteuerelektronik, Temperaturüberwachung etc. und/oder Interface-Änschlüssen auf dem Beleuchtungsträger vorgesehen sein.

Das erfindungsgemäße Verfahren zur Herstellung eines Beleuchtungsträgers nach einem der vorherigen Ansprüche, umfasst wenigstens folgende Verfahrensschritte: bestücken des Beleuchtungsträgers mit Emittier-Mitteln und ggf. anderen Bauelementen in einer planen Flächenebene sowie aufbringen des Beleuchtungsträgers auf eine geeignete Trägerschicht oder einem Gehäuse oder einem anderen geeigneten Bauteil, welches für jeden Beleuchtungspunkt eine definierte Abstrahlrichtung vorgibt. Die Bestückung in einer Ebene gestattet in vorteilhafter Weise die Ausbildung eines gleichermaßen einfachen wie preiswerten Herstellprozesses. Das Aufbringen des Beleuchtungsträgers auf eine geeignete Trägerschicht oder dergleichen erlaubt nicht nur ein ökonomisches Ausrichten der Beleuchtungspunkte; es ermöglicht zugleich ein gutes Recycling der Teile, welche sich vom mechanischen Träger später einfach abziehen lassen.

Obgleich denkbar ist, den einzelnen Beleuchtungsträger zu Bestücken, setzt dies jedoch im Hinblich auf die einzelnen Auskragungen verhältnismäßig kostspielige Bestückplätze voraus. Erfindungsgemäß bevorzugt ist der Beleuchtungsträger deshalb zumindest während des Bestückvorgangs Teil eines großflächigen, insb. flexiblen, auch als Flex-Folie bezeichneten, Schaltungsträgers, in welchem mehrere Beleuchtungsträger nebst den daran ausgebildeten Auskragungen vorteilhaft gehaltert sind, welcher zur weiteren Kostenoptimierung beispielsweise wie Endlosmaterial aufgerollt ist, so dass eine Bestückung von Rolle zu Rolle erfolgen kann und erst kurz vor dem Einbau in ein Endprodukt eine Vereinzelung erfolgen braucht, so dass einzelne Beleuchtungsträger nebst Auskragungen in einem Fertigungsschritt der Vereinzelung, beispielsweise durch einfaches Ausstanzen, in großer Stückzahl verhältnismäßig preiswert gewinnbar sind.

Die Erfindung besteht weiterhin in einem optischen Modul, u.a. umfassend einen erfindungsgemäß (hergestellten) Beleuchtungsträger. Auf diese Weise kommen die im Zusammenhang mit dem Beleuchtungsträger beschriebenen Vorteile auch im Rahmen eines optisches Moduls zur Geltung, welches wiederum Teil eines Gesamtsystems z.B. zur Überwachung von Objekten im Innen- und/oder Außenraum eines Kraftfahrzeuges sein kann.

Nützlicherweise umfassen vorbezeichnete optische Module eine Mehrzahl von Mitteln zum Emittieren von elektromagnetischer Strahlung sowie wenigstens eine Linseneinheit zum projizieren von elektromagnetischer Strahlung auf eine für elektromagnetische Strahlung sensitive Fläche. Als Emittiermittel kommen insb. LED-Felder und/oder Laserdioden oder dergleichen in Frage. Unter Linseneinheit wird im Kontext der vorliegenden Erfindung eine Linsenhalterung mit wenigstens einer Linse verstanden. Die sensitive Fläche schließlich kann Teil eines CMOS- oder CCD-Halbleiterelements sein oder auch ein einzelnes lichtempfindliches Element wie z.B. eine Fotodiode, welche sozusagen einem Pixel entspricht, wie dies vor allem bei sog. LIght Detection And Ranging (LIDAR) Systemen angewandt wird.

Soweit das Gehäuse des optischen Moduls zumindest teilweise aus einem Wärme ableiten Material gefertigt ist (z.B. aus Metall/Aluminium-Druckguss), wird vorgeschlagen, den Beleuchtungsträger wenigstens abschnittsweise unmittelbar auf den Wärme ableitenden Teilen des Gehäuses zu applizieren (z.B. Kleben, Laminieren, etc....), womit gleichermaßen ein guter Wärmeübergang sowie Kühlung bewirkt und vorteilhaft keine weiteren Kühlmaßnahmen erforderlich sind, so dass insbesondere auf teure sog. ASCOM-Platinen oder Leiterplattenträgermaterialien auf Aluminium verzichtet werden kann. Da die Emittier-Mittel zudem bevorzugt außen auf dem Gehäuse angeordnet sind, wurden zusätzliche Lichtabdichtungsthematiken insb. bezüglich der im Gehäuseinnern angeordneten für elektromagnetischen Strahlung sensitiven Fläche vorteilhaft obsolet.

Schließlich kann ein für elektromagnetische Strahlung durchlässiges Abdeckelement vorgesehen sein, welches das/die Emittier-Mittel und/oder die Linseneinheit(en) designmäßig gut aussehend dergestalt überdeckt, dass eine direkte Berührung vorteilhaft verhindert ist (Wasser, Staub, Verbrennungsgefahr der Finger, etc.). Ein derartiges Abdeckelement ist Gegenstand der nachveröffentlichten DE-A-103 54 945, auf welche diesbezüglich hiermit vollumfänglich Bezug genommen wird.

Die vorliegende Erfindung eignet sich für alle lichtemittierenden Anwendungen, deren Beleuchtungspunkte gezielt bezüglich einer zu beleuchtenden Szene ausrichtbare Abstrahlrichtungen benötigen, die zudem preiswert, bauniedrig und/oder designbezogen herstellbar sind, insbesondere für optische Moduln, ggf. kombiniert mit LIDAR-Anwendungen, als Teil eines Gesamtsystems z.B. zur Überwachung von Objekten im Innen- und/oder Außenraum eines Kraftfahrzeuges.

Die Erfindung wird nun mit Bezug auf die begleitenden Zeichnungen anhand bevorzugter Ausführungsformen eines als Stereokamera ausgebildeten optischen Moduls für Videoanwendungen im Automobilbau, auf welches die Erfindung jedoch nicht beschränkt ist, beispielhaft erläutert.

Darin zeigen schematisch:
- Fig. 1: in einer perspektivischen Ansicht einen unbestückten Beleuchtungsträger;
- Fig. 2: in einer Vorderansicht einen, insb. mit Emittier-Mitteln, bestückten Beleuchtungsträger;
- Fig. 3: den Beleuchtungsträgern nach Fig. 2 appliziert auf dem Gehäuse eines als Stereokamera ausgebildeten optischen Moduls;
- Fig. 4: in einer perspektivischen Ansicht ein als Stereokamera ausgebildetes optisches Modul nach dem Stand der Technik mit als LED-Feld ausgebildeten Emittier-Mitteln, welche auf einer herkömmlichen starren Platine feldförmig zwischen zwei Linseneinheiten im Kameragehäuse angeordnet sind; und
- Fig. 5: in einer perspektivischen Ansicht ein alternatives als Stereokamera ausgebildetes optisches Modul nach dem Stand der Technik mit zwei mit LEDs bestückte Platinen, welche unter einem Winkel zueinander geneigt angeordnet sind.

Bei der nachfolgenden Beschreibung der bevorzugten Ausführungsformen der vorliegenden Erfindung bezeichnen gleiche Bezugszeichen gleiche oder vergleichbare Komponenten.

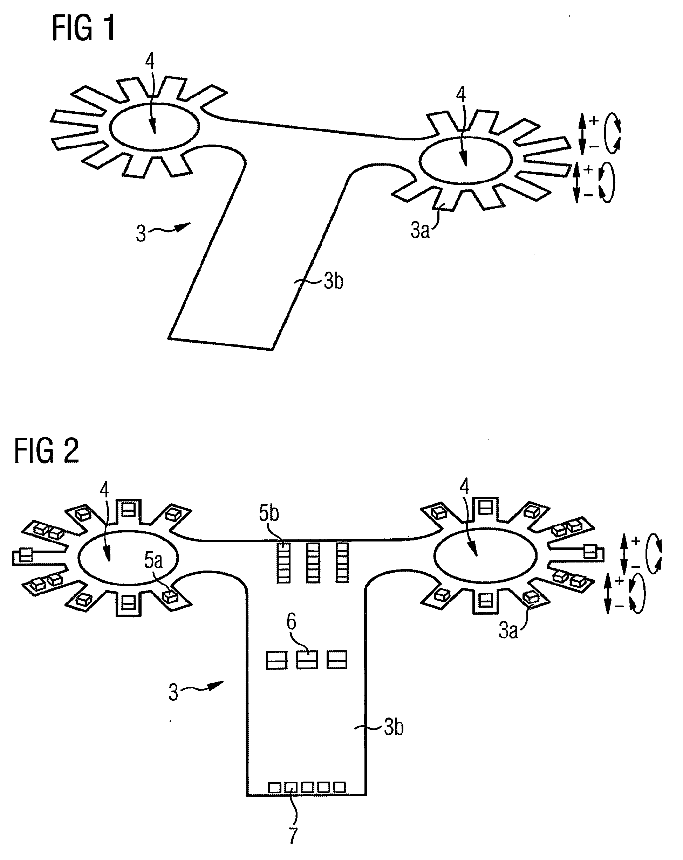

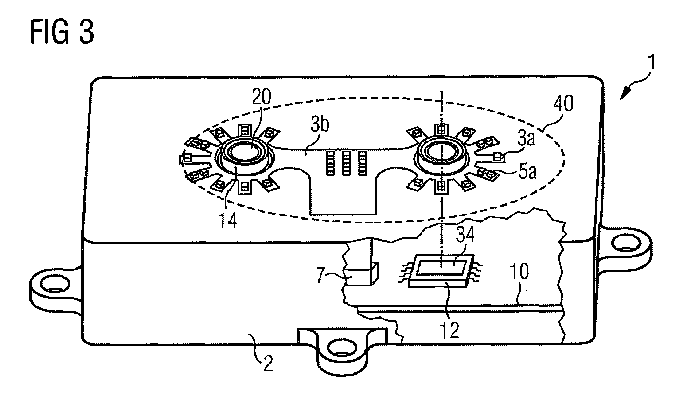

Fig. 1 zeigt in einer perspektivischen Ansicht einen unbestückten Beleuchtungsträger 3 mit einem Grundkörper 3b, an welchem eine Mehrzahl an Auskragungen 3a angeordnet sind. Die Auskragungen 3a erlauben in vorteilhafter Weise die definierte Anordnungen von Emittier-Mitteln 5, beispielsweise sichtbares oder nichtsichtbares Licht emittierende LEDs 5a oder dergleichen. Die gezielte Ausbildung von Auskragungen 3a mit Beleuchtungspunkten 5a hat eine verbesserte Lichtausbeute zum Vorteil, so dass der erfindungsgemäße Beleuchtungsträger 3 mit weniger Emittier-Mitteln 5 auskommt und damit preiswerter ist, als vergleichbare aus dem Stand der Technik bekannte starre Beleuchtungsplatinen 8 bzw. 8a, 8b (vgl. Fig. 4 bzw. 5). Deutlich erkennbar sind zudem zwei Ausnehmungen 4, durch welche Linseneinheiten 14, 20(vgl. dazu Fig. 3) oder vergleichbare lichtaufnehmende Mittel unmittelbar benachbart zu den Emittier-Mitteln 5 vorteilhaft anordenbar sind.

Fig. 2 zeigt in einer Vorderansicht den Beleuchtungsträger 3 nach Fig. 1 in einem, insb. mit Emittier-Mitteln 5a, bestückten Fertigungszustand. Die Bestückung der Auskragungen 3a mit jeweils wenigstens einem Emittier-Mittel 5 erfolgt bevorzugt in einem Fertigungsschritt, bei dem die Auskragungen 3a allesamt im Wesentlichen in einer Flächenebene liegen. Obgleich auch noch später denkbar, erfolgt neben der Bestückung der Auskragungen 3a mit Emittier-Mittel 5a bevorzugt zugleich die Bestückung des Grundkörpers 3b mit zusätzlichen einzeln oder feldförmig angeordneten Emittier-Mitteln 5, SMD Bauteilen 6 und/oder Interface-Anschlüssen 7.

Vorzugsweise erfolgt erst im Anschluss an den Bestückungsvorgang ein Aufbringen (Kleben, Verschweißen, Verstemmen, etc. ...) des Beleuchtungsträgers 3 auf eine geeignete Trägerschicht (nicht dargestellt) oder einem Gehäuse 2 oder einem anderen geeigneten Bauteil, dass für jeden Beleuchtungspunkt 5a eine definierte Abstrahlrichtung vorgibt. Gleiches gilt auch für die auf dem Grundkörper 3b einzeln oder feldförmig angeordneten LEDs 5b oder dergleichen, welche ebenfalls zueinander geneigt angeordnet sein können, wenn die Trägerschicht bzw. das den Beleuchtungsträger 3 tragende Bauteil entsprechend profiliert ausgebildet ist (nicht dargestellt).

Alternativ, ggf. auch kumulativ, zum vorbesagten ist die Abstrahlrichtung der Beleuchtungspunkte 5a einer jeden Auskragung 3a, insbesondere durch Auf- und/oder Abbiegung und/oder Verdrehung (Torsion) der einzelnen Auskragungen 3a, gezielt bezüglich einer zu beleuchtenden Szene ausrichtbar. Insbesondere ist ein Aufbringen des Beleuchtungsträgers 3, welcher vorzugsweise ein flexibler Schaltungsträger bzw. eine sog. Flex-Folie ist (z.B. Polyester, Polyimid, FR4 mit einer Dicke von nur etwa 0,2 mm, oder dergleichen), auf ein biegsames Blech (nicht dargestellt) denkbar, wobei die Auskragungen 3a eines derartiger "Verbunds" dann durch Biegen jeweils in die richtige Form bringbar sind, was in Fig. 2 - wie schon in Fig. 1 - mittels Pfeilen angedeutet ist. Somit kann im Prinzip ein jedes Emittier-Mittel 5 für einen bestimmten Ausleuchtbereich in vorteilhafter Weise zielgenau ausgerichtet werden. Dabei können als Emittier-Mittel 5a insbesondere auch LEDs mit verschiedenen Abstrahlcharakteristiken Verwendung finden, beispielsweise sog. Spot- oder Weitwinkel-LEDs.

Fig. 3 schließlich zeigt den bestückten Beleuchtungsträger 3 nach Fig. 2, appliziert (z.B. durch Kleben, Laminieren, etc. ...) auf dem Gehäuse 2 eines als Stereokamera ausgebildeten optischen Moduls 1. Deutlich erkennbar ist, wie eine Anordnung direkt um die Objektive bzw. Linseneinheiten, umfassend einen Linsenhalter 14 mit wenigsten einer Linse 20, platztechnisch möglich und je nach Anwendung auch angebracht ist; und zwar nicht nur bei der beispielhaft dargestellten Stereokamera 1, sondern auch bei sog. Monokameras. Die Linseneinheit 14, 20 dient der Projektion von elektromagnetischer Strahlung auf eine für elektromagnetische Strahlung sensitiven Fläche 34, welche beispielsweise Teil eines Halbleiterelements 12 ist, das auf einem gesonderten Schaltungsträger 10 angeordnet ist, wobei Schaltungsträger 10 und Beleuchtungsträger 3 beispielsweise über den Interface-Anschluss 7 elektrotechnische miteinander verbindbar sind. Schließlich ist in Fig. 3 mittels einer gestrichelten Linie ein für elektromagnetische Strahlung durchlässiges Abdeckelement 40 angedeutet, welches das/die Emittier-Mittel 5a, 5b und/oder die Linseneinheit(en) 14, 20 überdeckt und bevorzugt dem in der nachveröffentlichten DE-A-103 54 945 beschriebenen Aufbau folgt.

Die vorliegende Erfindung eignet sich für alle lichtemittierenden Anwendungen, deren Beleuchtungspunkte 5a gezielt bezüglich einer zu beleuchtenden Szene ausrichtbare Abstrahlrichtungen benötigen, die zudem preiswert, bauniedrig und / oder designbezogen herstellbar sind, insb. für optische Module als Teil eines Gesamtsystems z.B. zur Überwachung von Objekten im Innen- und/oder Außenraum eines Kraftfahrzeuges.

## Patentansprüche

1. Beleuchtungsträger (3) mit einer Mehrzahl an Emittier-Mitteln (5) zum Emittieren von elektromagnetischer Strahlung, insbesondere für ein optisches Modul (1) mit wenigstens einer Linseneinheit (14, 20) zum Projizieren von elektromagnetischer Strahlung auf eine für elektromagnetische Strahlung sensitive Fläche (34);
**dadurch gekennzeichnet, dass**
der Beleuchtungsträger (3) einen Grundkörper (3b) mit einer Mehrzahl daran angeordneter Auskragungen (3a) aufweist, wobei auf einer jeden Auskragung (3a) zumindest ein Emittier-Mittel (5a) angeordnet ist.

2. Beleuchtungsträger (3) nach Anspruch 1, **dadurch gekennzeichnet, dass** die Abstrahlrichtung der Beleuchtungspunkte (5a) einer jeden Auskragung (3a) durch Aufbringung des Beleuchtungsträgers (3) auf eine entsprechend vorgeformte Trägerschicht oder einem Gehäuse (2) oder einem anderen geeigneten Bauteil bezüglich einer zu beleuchtenden Szene definiert ausrichtbar ist.

3. Beleuchtungsträger (3) nach Anspruch 1 oder 2, **dadurch gekennzeichnet, dass** die Abstrahlrichtung der Beleuchtungspunkte (5a) einer jeden Auskragung (3a), insbesondere durch Auf- und/oder Abbiegung und/oder Verdrehung (Torsion) der einzelnen Auskragungen (3a), gezielt bezüglich einer zu beleuchtenden Szene ausrichtbar ist.

4. Beleuchtungsträger (3) nach einem der Ansprüche 1 bis 3, **dadurch gekennzeichnet, dass** der Beleuchtungsträger (3) wenigstens eine, beispielsweise kreisförmige, Aussparung (4) aufweist, um welche (4) zumindest ein Teil der Auskragungen (3a), vorzugsweise sternförmig, halbmondförmig oder dergleichen, angeordnet sind.

5. Beleuchtungsträger (3) nach einem der vorherigen Ansprüche, **gekennzeichnet durch** einzeln oder feldförmig angeordnete zusätzliche Emittier-Mittel (5b), SMD Bauteilen, Elektronikkomponenten wie Ansteuerelektronik, Temperaturüberwachung etc. (6) und/oder Interface-Anschlüssen (7).

6. Verfahren zum Herstellen eines Beleuchtungsträgers (3) nach einem der vorherigen Ansprüche, **gekennzeichnet durch** folgende Verfahrensschritte:
- Bestücken des Beleuchtungsträgers (3) mit Emittier-Mitteln (5a, 5b) und ggf. anderen Bauelementen (6, 7) in einer im Wesentlichen planen Flächenebene;
- Aufbringen des Beleuchtungsträgers (3) auf eine geeignete Trägerschicht oder ein Gehäuse (2) oder ein anderes geeignetes Bauteil, welches für jeden Beleuchtungspunkt eine definierte Abstrahlrichtung vorgibt.

7. Verfahren nach Anspruch 6, **dadurch gekennzeichnet, dass** der Beleuchtungsträger (3) zumindest während des Bestückvorgangs Teil eines großflächigen Schaltungsträgers ist, aus welchem einzelne Beleuchtungsträger (3) nebst den daran angeordneten Auskragungen (3a) in einem Fertigungsschritt der Vereinzelung gewinnbar sind.

8. Verfahren nach Anspruch 6 oder 7, **dadurch gekennzeichnet, dass** der den Beleuchtungsträger (3) tragende Teil des Gehäuses (2) bzw. der Trägerschicht entsprechend einer gewünschten Abstrahlcharakteristik vorgeformt ist.

9. Verfahren nach einem der Ansprüche 6 bis 8, **dadurch gekennzeichnet, dass** der Beleuchtungsträgers (3) nach Aufbringung auf die geeignete Trägerschicht durch Auf- und/oder Abbiegen und/oder Verdrehen (Torsion) der auskragenden Bereiche (3a) in eine die gewünschte Abstrahlcharakteristik je Beleuchtungspunkt gewährleistende Form gebracht wird.

10. Optisches Modul (1), wenigstens umfassend
- eine Linseneinheit (14, 20) zum projizieren von elektromagnetischer Strahlung auf eine für elektromagnetische Strahlung sensitive Fläche (34); sowie
- einen Beleuchtungsträger (3) nach einem der Ansprüche 1 bis 5.

11. Optisches Modul (1) nach Anspruch 10, wobei das Gehäuse (2) des Moduls (1) zumindest teilweise aus einem Wärme ableiten Material gefertigt ist, **dadurch gekennzeichnet, dass** der Beleuchtungsträger (3) wenigstens abschnittsweise unmittelbar auf den Wärme ableitenden Teilen des Gehäuses (2) appliziert ist.

12. Optisches Modul nach Anspruch 10 oder 11, **gekennzeichnet durch** ein für elektromagnetische Strahlung durchlässiges Abdeckelement (40), welches das/die Emittier-Mittel (5a, 5b) und/oder die Linseneinheit(en) (14, 20) überdeckt.

## Claims

1. Illumination support (3) with a plurality of emission means (5) for emitting electromagnetic radiation, in particular for an optical module (1) with at least one lens unit (14, 20) for projecting electromagnetic radiation onto a surface (34) sensitive to electromagnetic radiation:
**characterised in that**
the illumination support (3) has a basic body (3b) with a plurality of projections (3a) disposed thereon, with at least one emission means (5a) being disposed on each projection (3a).

2. Illumination support (3) according to claim 1,
**characterised in that** the radiation direction of the illumination points (5a) of each projection (3a) can be aligned in a defined manner in respect of a scene to be illuminated by attaching the illumination support (3) to a correspondingly pre-formed support layer or a housing (2) or another suitable component.

3. Illumination support (3) according claim 1 or 2,
**characterised in that** the radiation direction of the illumination points (5a) of each projection (3a) can be aligned in a defined manner in respect of a scene to be illuminated in particular by bending the individual projections (3a) up and/or down and/or by twisting them (torsion).

4. Illumination support (3) according to one of claims 1 to 3, **characterised in that** the illumination support (3) has at least one, for example circular, recess (4), around which (4) at least some of the projections (3a) are disposed, preferably in a star shape, half-moon shape, etc.

5. Illumination support (3) according to one of the preceding claims, **characterised by** additional emission means (5b) disposed individually or to form a field, SMD components, electronic components, such as electronic activation systems, temperature monitors, etc. (6) and/or interface connections (7).

6. Method for producing an illumination support (3) according to one of the preceding claims, **characterised by** the following method steps:
- mounting emission means (5a, 5b) and in some instances other components (6, 7) on the illumination support (3) in an essentially planar surface plane;
- attaching the illumination support (3) to a suitable support layer or a housing (2) or another suitable component, which predetermines a defined radiation direction for each illumination point.

7. Method according to claim 6, **characterised in that** the illumination support (3), at least during the mounting process, is part of a large circuit support, from which individual illumination supports (3) and the projections (3a) disposed thereon can be obtained in a separating step during manufacture.

8. Method according to claim 6 or 7, **characterised in that** the part of the housing (2) or the support layer carrying the illumination support (3) is pre-formed according to a required radiation characteristic.

9. Method according to one of claims 6 to 8,
**characterised in that** the illumination support (3) is formed to ensure the required radiation characteristic for each illumination point after attachment to the suitable support layer by bending the projecting areas (3a) up and/or down and/or by twisting them (torsion).

10. Optical module (1) comprising at least:
- a lens unit (14, 20) to project electromagnetic radiation onto a surface (34) sensitive to electromagnetic radiation; and
- an illumination support (3) according to one of claims 1 to 5.

11. Optical module (1) according to claim 10, with the housing (2) of the module (1) being made at least partially from a heat-dissipating material, **characterised in that** the illumination support (3) is applied at least in sections directly to the heat-dissipating parts of the housing (2).

12. Optical module (1) according to claim 10 or 11,
**characterised by** a cover element (40) that allows the passage of electromagnetic radiation, which covers the emission means (5a, 5b) and/or the lens unit(s) (14, 20).

## Revendications

1. Support d'éclairage (3), comprenant une pluralité de moyens d'émission (5) pour émettre un rayonnement électromagnétique, en particulier destiné pour un module optique (1) comportant au moins un ensemble de lentilles (14, 20) pour projeter un rayonnement électromagnétique sur une surface sensible au rayonnement électromagnétique (34) ;
**caractérisé en ce que** le support d'éclairage (3) comprend un corps de base (3b) muni d'une pluralité de saillies (3a), au moins un moyen d'émission (5a) étant disposé sur chacune des saillies (3a).

2. Support d'éclairage (3) selon la revendication 1, **caractérisé en ce que** la direction d'émission des points d'éclairage (5a) de chaque saillie (3a) est orientable par rapport à une scène à éclairer de façon définie par le montage du support d'éclairage (3) sur une couche de support préformée présentant la forme correspondante, ou sur un boîtier (2) ou un autre composant approprié.

3. Support d'éclairage (3) selon la revendication 1 ou 2, **caractérisé en ce que** la direction d'émission des points d'éclairage (5a) de chaque saillie (3a) est orientable de façon ciblée par rapport à une scène à éclairer, en particulier par un pliage vers le haut et/ou vers le bas et/ou par une torsion des différentes saillies (3a).

4. Support d'éclairage (3) selon l'une des revendications 1 à 3, **caractérisé en ce que** le support d'éclairage (3) comprend au moins un évidement (4) par exemple circulaire, autour duquel (4) sont arrangées au moins une partie des saillies (3a), de préférence en étoile, en demi-lune ou similaire.

5. Support d'éclairage (3) selon l'une des revendications précédentes, **caractérisé par** des moyens d'émission additionnels (5b), disposés séparément ou arrangés en champ, des composants à montage en surface (SMD), des composants électroniques tels que des circuits électroniques d'excitation, de surveillance de température (6), etc., et/ou des connexions d'interface (7).

6. Procédé de fabrication d'un support d'éclairage (3) selon l'une des revendications précédentes, **caractérisé par** les étapes de procédé suivantes :
- l'équipement du support d'éclairage (3) en moyens d'émission (5a, 5b) et éventuellement en d'autres composants (6, 7) sur une surface sensiblement plane ;
- le montage du support d'éclairage (3) sur une couche de support appropriée ou sur un boîtier (2) ou un autre composant approprié qui préétablit une direction d'émission pour chaque point d'éclairage.

7. Procédé selon la revendication 6, **caractérisé en ce que** le support d'éclairage (3) fait partie, au moins pendant le processus d'équipement, d'un support de circuit à grande surface à partir duquel les différents supports d'éclairage (3) avec les saillies (3a) disposées sur ceux-ci peuvent être obtenus au cours de la fabrication dans une étape de séparation.

8. Procédé selon la revendication 6 ou 7, **caractérisé en ce que** la partie du boîtier (2) ou, respectivement, de la couche de support soutenant le support d'éclairage (3) est préformée selon une caractéristique d'émission désirée.

9. Procédé selon l'une des revendications 6 à 8, **caractérisé en ce que** le support d'éclairage (3), après être placé sur la couche de support appropriée, est mis, par un pliage vers le haut et/ou vers le bas et/ou par une torsion des différentes saillies (3a), dans une forme assurant la caractéristique d'émission désirée.

10. Module optique (1), comprenant au moins
- un ensemble de lentilles (14, 20) pour projeter un rayonnement électromagnétique sur une surface (34) sensible au rayonnement électromagnétique ;
- ainsi qu'un support d'éclairage (3) selon l'une des revendications 1 à 5.

11. Module optique (1) selon la revendication 10 dans lequel le boîtier (2) du module (1) est fabriqué au moins partiellement en une matière dissipant la chaleur, **caractérisé en ce que** le support d'éclairage (3) est appliqué au moins par sections directement sur les parties du boîtier (2) dissipant la chaleur.

12. Module optique selon la revendication 10 ou 11, **caractérisé par** un élément de couverture (40) perméable au rayonnement électromagnétique qui recouvre le ou les moyens d'émission (5a, 5b) et/ou le ou les ensembles de lentilles (14, 20).
